# FASCICULE DE BREVET EUROPEEN

(11) **EP 2 627 928 B1**
(45) Date de publication et mention de la délivrance du brevet: **21.01.2015**
(21) Numéro de dépôt: 11769860.5
(22) Date de dépôt: 11.10.2011
(51) Int. Cl.: F16H 3/24, F16H 63/36, B62D 51/06

(54) **BOÎTE DE VITESSES POUR ÉQUIPEMENT DE MOTOCULTURE ET ÉQUIPEMENT DE MOTOCULTURE COMPRENANT UNE TELLE BOÎTE DE VITESSES**
GETRIEBE FÜR EINE MOTORISIERTE LANDWIRTSCHAFTLICHE VORRICHTUNG UND MOTORISIERTE LANDWIRTSCHAFTLICHE VORRICHTUNG MIT EINEM DERARTIGEN GETRIEBE
GEARBOX FOR MECHANISM FARMING IMPLEMENT AND MECHANIZED FARMING IMPLEMENT COMPRISING SUCH A GEARBOX

(30) Priorité: 28.06.2011 FR 1155763; 12.10.2010 FR 1058300
(43) Date de publication de la demande: 21.08.2013
(73) Titulaire: Pubert Henri SAS, 85110 Chantonnay (FR)
(72) Inventeur: GERBAUD, Nicolas, F-85110 Monsireigne (FR); VION, Peter, F-85700 Pouzauges (FR); LEJEUNE, Pierre, F-85110 Sainte-Cécile (FR)
(74) Mandataire: Bioret, Ludovic
(86) Numéro de dépôt international: PCT/EP2011/067744
(87) Numéro de publication internationale: WO 2012/049184

(56) Documents cités:
- EP-A1- 0 826 580
- FR-A1- 2 412 758
- FR-A1- 2 533 653
- FR-A1- 2 880 665
- US-A- 4 567 949

## Description

### 1. Domaine technique de l'invention

L'invention concerne les boîtes de vitesses pour équipements mobiles, en particulier les boîtes de vitesses pour équipements de motoculture, et plus spécifiquement les boîtes de vitesses pour motobineuses. L'invention concerne également les équipements de motoculture, et plus particulièrement les motobineuses et les motoculteurs, comprenant de telles boîtes de vitesses.

### 2. Arrière-plan technologique

Une boîte de vitesses pour équipement de motoculture est destinée à interconnecter des moyens moteurs d'un équipement de motoculture à des organes d'entraînement de l'équipement. Un tel équipement de motoculture est par exemple une motobineuse, un motoculteur, une débroussailleuse ou tout équipement équivalent.

Les équipements les plus perfectionnés comprennent des boîtes de vitesses comprenant une ou plusieurs vitesses de marche avant. Le passage d'une vitesse à une autre est obtenu par une action, en général manuelle, sur un sélecteur de vitesses qui permet par son déplacement, de modifier les rapports de transmission de la boîte de vitesses.

Certaines boîtes de vitesses disposent en outre d'une marche arrière pour faciliter les manoeuvres, par exemple au voisinage d'un obstacle, telle qu'une racine, une pierre, etc., et d'un mécanisme de débrayage pour faciliter le changement d'allure et le passage de la marche avant à la marche arrière.

Il est connu que de telles boîtes de vitesses comprennent :
- un arbre d'entrée adapté pour être entraîné en rotation par des moyens moteurs,
- un arbre de sortie adapté pour entraîner des organes d'entraînement de l'équipement,
- un pignon monté mobile sur l'arbre d'entrée pour permettre par son déplacement une modification des rapports de transmission entre l'arbre d'entrée et l'arbre de sortie.

Une telle boîte de vitesses est connue du document US 4567949 A, qui divulgue les caractéristiques du préambule de la revendication 1.

Ces boîtes de vitesses mettent en oeuvre un grand nombre de pièces mécaniques complexes, ce qui en fait des boîtes onéreuses, lourdes et encombrantes.

En outre, chaque type d'équipement de motoculture est pourvu, selon les fonctionnalités qui lui sont conférées - vitesse unique, plusieurs vitesses, marche arrière, etc. - d'une boîte de vitesses spécifique. Ainsi, l'industriel doit développer une nouvelle boîte de vitesses qui permet de répondre aux spécifications des produits de chaque nouvelle gamme. L'ajout ou la suppression d'une vitesse se révèle le plus souvent impossible une fois la boîte de vitesses conçue.

Il existe donc un besoin pour des boîtes de vitesses qui puissent être configurées, à partir d'une même architecture, sans difficultés majeures, dans les usines de montage pour adapter les fonctionnalités des boîtes de vitesses aux équipements sur lesquelles elles seront montées.

En outre, il est difficile avec les boîtes de vitesses actuelles qui comprennent plusieurs marches avant (notamment une marche avant rapide et une marche avant lente) et une marche arrière de passer d'une vitesse de marche avant rapide à une vitesse de marche arrière. En particulier, dans une telle situation, il convient de passer de la marche avant rapide à la marche avant lente, puis de la marche avant lente à la marche arrière, ce qui s'avère en pratique assez contraignant, notamment sur les terrains rocailleux nécessitant de fréquents passages en marche arrière pour se dégager d'un bloc de pierre, ou sur les chemins tortueux imposant un maniement précis de l'équipement de motoculture sur lequel cette boîte de vitesses est montée.

Enfin, les boîtes de vitesses actuelles qui comprennent plusieurs rapports de marche avant (notamment une marche avant rapide et une marche avant lente) ne permettent d'obtenir que des plages relativement restreintes de vitesses de rotation d'outils avec chacun des rapports. Par exemple, les motoculteurs existants qui comprennent des boîtes de vitesses, qui sont souvent des outils de poids importants (pesant entre 85 et 90 kg) et coûtant cher, mettant en oeuvre des moteurs de 5 ou 6 Cv, ne présentent pas de continuité des plages de vitesses accessibles. Ainsi, ils ne permettent généralement pas d'accéder aux vitesses de rotation d'outils comprises entre 45 et 60 tours/minute et au-dessus de 145 tours/minute.

L'homme du métier n'a jusqu'à aujourd'hui pas cherché à utiliser les outils portés par les motoculteurs ou les motobineuses à ces vitesses. Pourtant, comme l'ont découvert les inventeurs, les vitesses de rotation d'outils qui sont usuellement accessibles ne sont pas toujours les mieux adaptées aux différentes taches qui pourraient être réalisées par le motoculteur.

### 3. Objectifs de l'invention

Dès lors, l'invention vise à pallier au moins certains des inconvénients des boîtes de vitesses de l'état de la technique.

En particulier, selon certains de ses modes de réalisation, l'invention vise à fournir une boîte de vitesses qui permet de passer d'une vitesse de marche avant à une vitesse de marche arrière et réciproquement.

L'invention vise à fournir, dans au moins un mode de réalisation, un équipement de motoculture équipé d'une boîte de vitesse lui permettant de fonctionner avec des vitesses de rotation d'outil adaptées pour effectuer efficacement un grand nombre de taches différentes.

L'invention vise aussi à fournir, dans au moins un mode de réalisation de l'invention, une boîte de vitesses à deux vitesses de marche avant et une vitesse de marche arrière dont le passage d'une vitesse de marche avant à la vitesse de marche arrière peut être effectué rapidement, quelle que soit la vitesse de marche avant enclenchée.

L'invention vise aussi à fournir, dans au moins un mode de réalisation de l'invention, une boîte de vitesses à deux vitesses de marche avant et une vitesse de marche arrière dont le passage d'une vitesse de marche avant à la vitesse de marche arrière peut être effectué sans nécessiter un déplacement important du levier de vitesses, quelle que soit la vitesse de marche avant enclenchée.

L'invention vise aussi à fournir, dans au moins un mode de réalisation, une boîte de vitesses qui peut, à partir de la même architecture, au moins constituer une boîte de vitesses à une vitesse de marche avant ou à une vitesse de marche avant et une vitesse de marche arrière ou à deux vitesses de marche avant et une vitesse de marche arrière.

En particulier, l'invention vise à fournir, dans au moins un mode de réalisation, une boîte de vitesses pour équipement de motoculture qui peut être configurée simplement, c'est-à-dire notamment dont le bridage d'au moins une vitesse peut être réalisé sans modifications majeures de la boîte de vitesses.

L'invention vise aussi à fournir, dans au moins un mode de réalisation de l'invention, une boîte de vitesses modulaire, qui peut être configurée de manière à pouvoir être utilisée avec différents équipements de motoculture, indépendamment de leurs spécifications.

L'invention vise aussi à fournir, dans au moins un mode de réalisation, une boîte qui n'impose pas un effort important pour changer les rapports de transmission.

L'invention vise aussi à fournir, dans au moins un mode de réalisation, une boîte de vitesses compacte.

L'invention vise aussi à fournir, dans au moins un mode de réalisation de l'invention, une boîte de vitesses moins lourde que les boîtes de l'art antérieur.

### 4. Exposé de l'invention

Pour ce faire, l'invention concerne une boîte de vitesses pour équipement de motoculture, destinée à interconnecter des moyens moteurs à des organes d'entraînement de l'équipement, la boîte comprenant :
- un arbre d'entrée adapté pour être entraîné en rotation par lesdits moyens moteurs,
- un arbre de sortie adapté pour entraîner lesdits organes d'entraînement de l'équipement,
- un pignon, dit pignon baladeur, monté mobile sur l'arbre d'entrée, et adapté pour occuper au moins une première position de marche avant, au moins une deuxième position de marche avant, et au moins une position de marche arrière,
caractérisée en ce que la boîte est configurée de sorte que la position de marche arrière du pignon baladeur est située entre deux positions de marche avant.

Une boîte de vitesses selon l'invention présente donc une architecture nouvelle qui lui confère de nouvelles fonctionnalités. En particulier, dans une boîte de vitesses selon l'invention, la marche arrière est agencée entre les deux marches avant. Ainsi, quelle que soit la position de marche avant dans laquelle la boîte de vitesses se trouve, un utilisateur peut manoeuvrer la boîte de vitesses pour passer rapidement à la position de marche arrière. De même, lorsque la boîte est en position de marche arrière, il est aisé pour l'utilisateur de passer rapidement dans n'importe quelle position de marche avant.

Selon un mode de réalisation particulier, en première position de marche avant, le pignon baladeur concourt à former un premier rapport de transmission entre l'arbre d'entrée et l'arbre de sortie, les deux arbres tournant dans le même sens, tandis qu'en deuxième position de marche avant, le pignon baladeur concourt à former un deuxième rapport de transmission entre l'arbre d'entrée et l'arbre de sortie, les deux arbres tournants dans le même sens, alors qu'en position de marche arrière, le pignon baladeur concourt à former un troisième rapport de transmission entre l'arbre d'entrée et l'arbre de sortie, les arbres tournant dans un sens inverse.

Avantageusement, une boîte de vitesses selon l'invention comprend un arbre intermédiaire comprenant au moins deux pignons : un pignon, dit pignon proximal, adapté pour coopérer avec le pignon baladeur lorsqu'il occupe ladite première position de marche avant, et un pignon, dit pignon distal, adapté pour coopérer avec l'arbre de sortie.

L'arbre intermédiaire permet de former, notamment avec les arbres d'entrée et de sortie, des rapports de transmission de marche avant. Selon une variante avantageuse de l'invention, les arbres d'entrée, de sortie et intermédiaire sont parallèles.

Avantageusement, une boîte selon l'invention comprend un arbre de marche arrière comprenant au moins un pignon menant adapté pour coopérer avec le pignon baladeur lorsqu'il est dans la position de marche arrière, et un pignon mené adapté pour coopérer avec le pignon proximal de l'arbre intermédiaire.

L'arbre de marche arrière permet de former, notamment avec les arbres d'entrée et de sortie, un rapport de transmission de marche arrière. Selon une variante avantageuse de l'invention, les arbres d'entrée, de sortie et de marche arrière sont parallèles.

Selon cette variante, le pignon proximal de l'arbre intermédiaire présente deux fonctions distinctes. Il participe d'une part à la formation d'un premier rapport de transmission en marche avant par engrènement direct avec le pignon baladeur, lorsque ce dernier est dans une première position de marche avant. Il participe d'autre part à la formation d'un rapport de transmission en marche arrière par engrènement du pignon baladeur avec le pignon menant de l'arbre de marche arrière (lorsque le pignon baladeur est en position de marche arrière), ce dernier entraînant par l'intermédiaire du pignon mené de l'arbre de marche arrière, ledit pignon proximal de l'arbre intermédiaire, qui transmet son mouvement à l'arbre de sortie par l'intermédiaire du pignon distal de l'arbre intermédiaire.

Une telle architecture permet à la boîte selon ce mode de réalisation d'être compacte. En effet, le pignon proximal concourt à former deux rapports de transmission, là où dans les boîtes de l'art antérieur, un pignon concourt à un seul rapport de transmission. Une boîte selon ce mode de réalisation a donc moins de pièces que les boîtes de l'art antérieur, ce qui en fait une boîte moins encombrante, moins lourde et moins onéreuse.

Avantageusement et selon l'invention, l'arbre de sortie comprend au moins un pignon, dit pignon de sortie, adapté pour être entraîné en rotation par ledit pignon baladeur lorsqu'il se trouve dans ladite deuxième position de marche avant.

Selon cette variante, la deuxième vitesse de marche avant est obtenue par un engrènement direct entre le pignon baladeur de l'arbre d'entrée et le pignon de sortie de l'arbre de sortie.

Avantageusement et selon l'invention, l'arbre d'entrée et l'arbre de sortie sont coaxiaux.

Une telle architecture permet de faciliter le montage de la boîte de vitesses sur un équipement de motoculture et permet également de bénéficier d'une boîte compacte.

Avantageusement et selon l'invention, l'arbre d'entrée est apte à recevoir une bride limitant en partie le déplacement du pignon baladeur le long de l'arbre d'entrée.

Cette bride peut être de tous types. Elle peut par exemple être formée d'une entretoise qui se monte sur l'arbre d'entrée et qui contraint le déplacement du pignon baladeur sur l'arbre d'entrée vers l'une des deux vitesses de marche avant. Ainsi, une boîte munie d'une telle bride ne présente plus qu'une vitesse de marche avant et une vitesse de marche arrière. Cela permet de customiser les boîtes de vitesse à partir d'une architecture générale fabriquée en série.

Avantageusement, une boîte de vitesses selon l'invention comprend un sélecteur de vitesse adapté pour coopérer avec ledit pignon baladeur, et permettre par son déplacement une modification de rapport de transmission entre l'arbre d'entrée et l'arbre de sortie.

Un tel sélecteur de vitesse facilite la manoeuvre du déplacement du pignon baladeur.

Avantageusement et selon l'invention, le sélecteur de vitesse est mobile en rotation et comprend au moins deux éléments d'ancrage d'un câble agencés de part et d'autre de l'axe de rotation du sélecteur, chaque élément d'ancrage étant adapté pour recevoir un câble de commande de sorte qu'une sollicitation en traction du premier câble ancré dans le premier élément d'ancrage entraîne la rotation dudit sélecteur de vitesses dans un premier sens de rotation et qu'une sollicitation en traction du câble ancré dans le second élément d'ancrage entraîne la rotation dudit sélecteur dans le sens de rotation opposé.

Selon cette variante, une modification du rapport de transmission entre l'arbre d'entrée et l'arbre de sortie résulte d'une rotation du sélecteur de vitesse autour d'un axe de rotation. Cette rotation du sélecteur de vitesse entraîne un déplacement du pignon baladeur le long de l'arbre d'entrée (première position de marche avant, deuxième position de marche avant ou position de marche arrière). En outre, le sélecteur de vitesse comprend deux éléments d'ancrage, chaque élément d'ancrage étant adapté pour recevoir un câble de sorte qu'une sollicitation en traction du câble entraîne une rotation du sélecteur. Ces éléments d'ancrage sont agencés de part et d'autre de l'axe de rotation du sélecteur. Chaque élément d'ancrage présente donc une forme et des dimensions adaptées pour recevoir un câble de commande et le maintenir par rapport au sélecteur de vitesse, de telle sorte que, une fois ce câble relié à l'élément d'ancrage, une sollicitation en traction de ce câble de commande conduit à une sollicitation en rotation du sélecteur de vitesse.

L'élément d'ancrage peut par exemple être conçu de sorte qu'il solidarise le câble de commande au sélecteur de vitesse. Un tel élément d'ancrage est par exemple un rivet, un serre-câble à lamelle, un serre-câble à vis ou tout élément équivalent.

La sollicitation en traction sur le premier câble de commande ancré dans le premier élément d'ancrage entraîne la rotation du sélecteur dans un premier sens de rotation alors que la sollicitation en traction sur le second câble de commande ancré dans le second élément d'ancrage entraîne la rotation du sélecteur dans le sens de rotation opposé.

Une boîte de vitesses selon l'invention peut donc être commandée par un mécanisme exempt d'un ressort de rappel. Le déplacement du sélecteur de vitesse n'impose donc pas d'exercer une force importante sur le sélecteur.

En outre, les gaines de câbles de commande ne sont pas sollicitées en permanence en compression, ce qui permet d'augmenter la durée de vie de ces gaines.

Par ailleurs, le fait qu'une boîte de vitesses selon l'invention peut être commandée par un mécanisme à deux câbles de commande permet de rattraper facilement tout jeu quelle que soit la distance entre une poignée de commande de ces câbles et la boîte de vitesses.

Le sélecteur de vitesse d'une boîte de vitesses selon l'invention peut présenter différentes structures et différents agencements.

Selon une variante avantageuse de l'invention, le sélecteur de vitesse comprend :
- un levier de sélection comportant lesdits éléments d'ancrage,
- une fourchette solidaire du levier de sélection et s'étendant à l'intérieur de la boîte pour coopérer avec ledit pignon baladeur et permettre par son déplacement une modification de rapport de transmission entre l'arbre d'entrée et l'arbre de sortie.

Un tel sélecteur de vitesse présente l'avantage de comprendre un levier de sélection portant directement les éléments d'ancrage et pouvant donc être déplacé par des sollicitations en traction des câbles de traction. En outre, ce levier est solidaire d'une fourchette s'étendant à l'intérieur de la boîte et coopérant avec le pignon baladeur, de sorte qu'une sollicitation d'un des câbles de commande entraîne un changement de rapport de transmission.

Les éléments d'ancrage ménagés sur le levier de commande peuvent être de tous types. Selon une variante, ces éléments d'ancrage sont des rivets adaptés pour maintenir les câbles de commande solidaires du levier de commande. Selon une autre variante, ces éléments d'ancrage sont des attaches du type serre-câble, notamment serre-câble à lamelle ou serre-câble à vis.

Selon une variante avantageuse de l'invention, les éléments d'ancrage sont des orifices traversant ledit levier de sélection et s'étendant selon une direction sensiblement parallèle à l'axe de rotation du sélecteur.

De tels éléments d'ancrage peuvent recevoir un câble de commande dont une extrémité est passée à travers l'orifice. L'extrémité du câble est ensuite munie d'une butée qui empêche le passage de l'extrémité du câble en sens inverse à travers l'orifice. Lors de la sollicitation en traction du câble de commande, la butée vient en appui contre le pourtour de l'orifice formant l'élément d'ancrage, ce qui entraîne la rotation du sélecteur de vitesse autour de son axe de rotation.

Selon une variante avantageuse de l'invention, la boîte de vitesses comprend une platine fixée à un carter de boîte, ladite platine présentant un flasque comprenant des moyens de guidage des câbles de commande.

Les moyens de guidage de la platine permettent de guider les câbles de commande et donc d'éviter que les câbles ne s'entremêlent ou ne se prennent dans d'autres organes de la boîte ou de l'équipement sur lequel la boîte est montée.

Selon une variante avantageuse de l'invention, la boîte de vitesses comprend un dispositif à bille adapté pour coopérer avec ledit sélecteur de vitesse pour définir un ensemble de positions angulaires prédéterminées dudit sélecteur de vitesse, chaque position étant associée à un rapport de transmission prédéterminé.

Le dispositif à bille permet de définir des positions angulaires stables du sélecteur de vitesse. En outre, un tel dispositif permet un positionnement précis du sélecteur de vitesse. Un tel dispositif à bille coopère de manière particulièrement avantageuse avec un mécanisme de commande à deux câbles car la sollicitation en traction d'un câble permet de déplacer le sélecteur en rotation et le dispositif à bille permet à l'utilisateur de sentir, y compris si le câble est long, des points durs définissant une position stable du sélecteur de vitesse.

Selon une variante avantageuse de l'invention, le dispositif à bille comprend un poussoir à ressort à bille s'étendant selon une direction sensiblement perpendiculaire à l'axe de rotation du sélecteur, ladite bille étant adaptée pour coopérer avec des logements ménagés sur un bord périphérique du levier de sélection de manière à définir lesdites positions angulaires prédéterminées du levier de sélection.

Ce poussoir à ressort à bille est par exemple porté par ledit flasque de ladite platine.

Selon une variante avantageuse de l'invention, l'arbre de sortie comprend un fusible mécanique présentant une résistance à la rupture prédéterminée et adaptée pour se rompre si le couple transmis par l'arbre d'entrée à l'arbre secondaire dépasse une valeur prédéterminée.

Un tel fusible mécanique permet d'éviter la casse d'une roue ou d'un outil d'un équipement sur lequel la boîte de vitesses est montée en cas de choc entre cette roue ou cet outil et un obstacle. Ce fusible mécanique permet également d'éviter de surdimensionner les organes de la boîte de vitesses, tels que les pignons de transmission, sans pour autant risquer une rupture de ces organes.

Selon une variante de l'invention, l'arbre de sortie est emmanché dans un pignon de sortie de boîte et ledit fusible mécanique est une goupille qui s'étend diamétralement à travers ledit pignon de sortie de boîte et ledit arbre de sortie.

Une goupille selon cette variante de l'invention s'étend conjointement à travers le pignon de sortie de boîte et l'arbre de sortie. Dès lors, la rupture de la goupille qui intervient lorsque le couple transmis par l'arbre d'entrée à l'arbre secondaire dépasse une valeur prédéterminée, permet de préserver l'ensemble des éléments internes à la boîte et les organes d'entraînement de l'équipement sur lequel la boîte est montée. En cas de rupture de la goupille, l'arbre de sortie est dissocié de la boîte de vitesses et le pignon de sortie de boîte tourne dans le vide.

La goupille est une protection efficace qui présente en outre un coût bien inférieur à un limiteur de couple. De plus, une goupille selon cette variante de l'invention peut être aisément remplacée en cas de rupture de cette dernière. Enfin, il est possible d'adapter le diamètre de la goupille en fonction du couple maximal à autoriser. Une boîte de vitesses selon l'invention est donc aisément paramétrable en fonction des utilisations de la boîte et de l'équipement sur lequel la boîte est montée.

En particulier, une boîte de vitesses selon cette variante permet de constituer, à partir du même carter, au moins les trois configurations suivantes :
- une configuration dans laquelle la boîte présente une marche avant en vitesse lente, une marche avant en vitesse rapide et une marche arrière,
- une configuration dans laquelle la boîte présente une marche avant en vitesse lente et une marche arrière,
- une configuration dans laquelle la boîte comprend une marche avant en vitesse rapide et une marche arrière.

L'invention concerne également un équipement de motoculture comprenant une boîte de vitesses selon l'invention.

Un tel équipement est par exemple une motobineuse.

Selon une variante avantageuse de l'invention, l'équipement comprend une poignée de commande, deux câbles de commande ancrés auxdits éléments d'ancrage dudit sélecteur de vitesse de ladite boîte de vitesses, chaque câble étant en outre relié à ladite poignée de commande.

La poignée de l'équipement permet de commander la position du sélecteur de vitesse par l'intermédiaire des câbles de commande. Cette poignée peut être montée sur le guidon de manoeuvre de l'équipement dans le cas d'un équipement à conducteur marchant ou sur toute autre partie de l'équipement.

L'invention concerne également une boîte de vitesses et un équipement muni d'une boîte de vitesses caractérisés en combinaison par tout ou partie des caractéristiques mentionnées ci-dessus ou ci-après.

Selon certains de ses modes de réalisation, l'invention concerne également un équipement de motoculture comprenant un moteur pouvant être utilisé dans une plage de vitesses déterminée, et une boîte de vitesses (qui peut être du type décrit ci-dessus ou d'un autre type) destinée à interconnecter ledit moteurs à un arbre de travail apte à porter des outils, la boîte de vitesse présentant au moins une première position de marche avant, offrant un premier rapport de vitesses entre le moteur et l'arbre de travail, et une seconde position de marche avant, offrant un second rapport de vitesses entre le moteur et l'arbre de travail, chacune desdites positions de marche avant permettant l'entraînement de l'arbre de travail dans une plage de vitesses correspondant à la plage de vitesses du moteur. Dans ces modes de réalisation de l'invention, les plages de vitesses de l'arbre de travail rendues accessibles par la première et la deuxième position de marche avant se recoupent.

Ainsi, l'équipement de motoculture peut actionner les outils à une vitesse choisi dans une plage ininterrompue et étendue de vitesses de travail. Il permet ainsi d'utiliser une grande variété d'outils à des vitesses adaptées.

Avantageusement, ladite boîte de vitesse présente uniquement deux positions de marche avant.

De telles boîtes de vitesses sont simples et peuvent être mises en oeuvre dans des équipements de motoculture simple et peu coûteux. La grande souplesse d'utilisation apportée par cette boîte de vitesse lui permet de mettre en oeuvre des outils qui ne peuvent habituellement être mis en oeuvre que par des équipements de plus forte puissance, plus complexes et plus coûteux.

Préférentiellement, l'une desdites positions de marche avant offre un rapport de vitesse de 50 (+/- 5 ) / 1 entre l'arbre de sortie du moteur et l'arbre de travail, et l'autre position de marche avant offre un rapport de vitesses de 20 (+/- 5 ) / 1 entre l'arbre de sortie du moteur et l'arbre de travail.

De tels rapports de vitesses permettent d'obtenir des plages de vitesses de travail étendues et se recoupant avec les moteurs les plus couramment utilisés pour les équipements de motoculture.

De façon préférentielle, ladite boîte de vitesse présente également au moins une position de marche arrière.

De façon avantageuse, ledit moteur est utilisable dans la plage de vitesses comprise entre 1450 et 3600 tours/minute.

Cette plage de vitesse est particulièrement adaptée à la boîte de vitesse selon l'invention.

Selon un mode de réalisation avantageux de l'invention, l'arbre de travail est adapté pour entraîner des roues en rotation, dans certaines des configurations de l'équipement de motoculture.

L'équipement de motoculture peut ainsi effectuer une grande variété de travaux.

Avantageusement, l'équipement de motoculture est adapté pour porter un attelage permettant l'entraînement d'une remorque.

De façon avantageuse, l'équipement de motoculture est adapté pour être équipé d'au moins un outil choisi parmi :
- des fraises ;
- une charrue ;
- un butteur ;
- une lame de type bulldozer ;
- un émousseur ;
- un outil d'arrachage de pommes de terre.

L'équipement de motoculture permet ainsi d'effectuer un grand nombre de travaux variés, la grande plage de vitesses accessibles permettant une utilisation optimale d'un grand nombre d'outils différents.

Selon un mode de réalisation avantageux, l'équipement de motoculture comprend un carter couvrant au moins en partie les organes de transmission entre le moteur et la boîte de vitesses, ledit carter comprenant au moins une plaque translucide, de façon à permettre le contrôle visuel desdits organes de transmission.

Ainsi, l'utilisateur peut facilement effectuer un contrôle visuel des organes de transmission.

De façon avantageuse, l'équipement de motoculture constitue une motobineuse.

Bien que la motobineuse soit un équipement de relativement faible puissance, la mise en oeuvre de la boîte de vitesse selon l'invention lui permet de mettre en oeuvre un grand nombre d'outils qui ne sont généralement portés que par des équipements de plus forte puissance.

### 5. Liste des figures

D'autres buts, caractéristiques et avantages de l'invention apparaîtront à la lecture de la description suivante donnée à titre uniquement non limitatif et qui se réfère aux figures annexées, dans lesquelles :
- la figure 1 est une vue schématique en perspective d'une boîte de vitesses selon un mode de réalisation de l'invention,
- la figure 2 est une vue schématique d'une portion d'un équipement selon un mode de réalisation de l'invention sur laquelle sont représentées une boîte de vitesses selon un mode de réalisation de l'invention, une poignée de commande et des câbles de commande de la boîte de vitesses, la poignée de commande étant dans une position correspondant à une première marche avant,
- la figure 3 est une vue schématique d'une portion d'un équipement selon un mode de réalisation de l'invention sur laquelle sont représentées une boîte de vitesses selon un mode de réalisation de l'invention, une poignée de commande et des câbles de commande de la boîte de vitesses, la poignée de commande étant dans une position correspondant à une marche arrière,
- la figure 4 est une vue schématique d'une portion d'un équipement selon un mode de réalisation de l'invention sur laquelle sont représentées une boîte de vitesses selon un mode de réalisation de l'invention, une poignée de commande et des câbles de commande de la boîte de vitesses, la poignée de commande étant dans une position correspondant à une deuxième marche avant,
- la figure 5 est une vue schématique en perspective éclatée d'une boîte de vitesses selon un mode de réalisation de l'invention,
- la figure 6 est une vue schématique en perspective d'une boîte de vitesses selon un mode de réalisation de l'invention montée sur un équipement selon un mode de réalisation de l'invention,
- la figure 7 est une vue schématique en coupe d'une boîte de vitesses selon un mode de réalisation de l'invention, le pignon baladeur étant dans une première position de marche avant,
- la figure 8 est une vue schématique en coupe de la boîte de vitesses de la figure 7, le pignon baladeur étant dans une position de marche arrière,
- la figure 9 est une vue schématique en coupe de la boîte de vitesses des figures 7 et 8, le pignon baladeur étant dans une deuxième position de marche avant,
- la figure 10 est une vue en perspective d'un équipement de motoculture selon un mode de réalisation de l'invention, équipé de fraises,
- la figure 11 est une vue en perspective de l'équipement de motoculture de la figure 10 équipé d'une charrue,
- la figure 12 est une vue en perspective de l'équipement de motoculture de la figure 10 équipé d'un butteur,
- la figure 13 est une vue en perspective de l'équipement de motoculture de la figure 10 équipé d'une lame,
- la figure 14 est une vue en perspective de l'équipement de motoculture de la figure 10 équipé d'un outil d'arrachage de pommes de terre,
- la figure 15 est une vue en perspective de l'équipement de motoculture de la figure 10 équipé d'une remorque-**6. Description détaillée d'un mode de réalisation de l'invention**

Sur les figures, les échelles et les proportions ne sont pas strictement respectées et ce, à des fins d'illustration et de clarté.

### Construction et commande de la boîte de vitesses

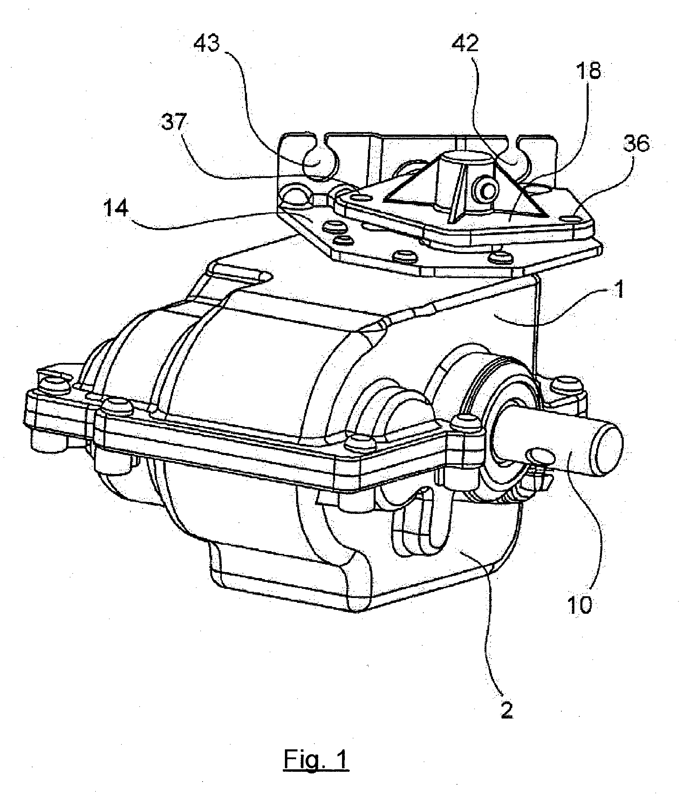

Dans toute la description détaillée qui suit en référence aux figures, sauf indication contraire, chaque pièce de la boîte de vitesses est décrite telle qu'elle est agencée lorsque les arbres d'entrée et de sortie de la boîte de vitesses s'étendent parallèlement au sol, le sélecteur de vitesses étant agencé sur le dessus de la boîte. Cet agencement est représenté notamment sur la figure 1.

Une boîte de vitesses selon un mode préférentiel de réalisation de l'invention comprend un carter formé de deux demi-coques -une demi-coque 1 supérieure et une demi-coque 2 inférieure - à l'intérieur duquel sont logés un arbre 10 d'entrée, un arbre 9 de sortie, un arbre 11 intermédiaire porté par des logements hémi-circulaires ménagés dans les parois des demi-coques 1, 2, et un arbre 80 de marche arrière. Selon le mode de réalisation des figures, les arbres 10 d'entrée et 9 de sortie sont coaxiaux.

La boîte de vitesses comprend en outre un sélecteur de vitesse adapté pour coopérer avec un pignon 6 baladeur, monté mobile en translation sur l'arbre 10 d'entrée. Ce pignon 6 baladeur est déplacé le long de l'arbre 10 d'entrée par l'intermédiaire du sélecteur de vitesses. Ce déplacement entraîne un changement de rapport de transmission entre l'arbre 10 d'entrée et l'arbre 9 de sortie. La vitesse de rotation de l'arbre 9 de sortie ainsi que son sens de rotation dépendent donc de la position du pignon 6 baladeur sur l'arbre 10 d'entrée.

Comme indiqué dans la suite, la boîte de vitesses est configurée de sorte que le pignon 6 baladeur puisse occuper trois positions distinctes lé long de l'arbre d'entrée : une première position de marche avant, dans laquelle un premier rapport de transmission est réalisé entre l'arbre d'entrée et l'arbre de sortie, les arbres tournant dans le même sens de rotation ; une deuxième position de marche avant, dans laquelle un deuxième rapport de transmission est réalisé entre l'arbre d'entrée et l'arbre de sortie, les arbres tournant dans le même sens de rotation ; et une position de marche arrière, dans laquelle un troisième rapport de transmission est réalisé entre l'arbre d'entrée et l'arbre de sortie, les arbres tournant dans des sens de rotation opposés.

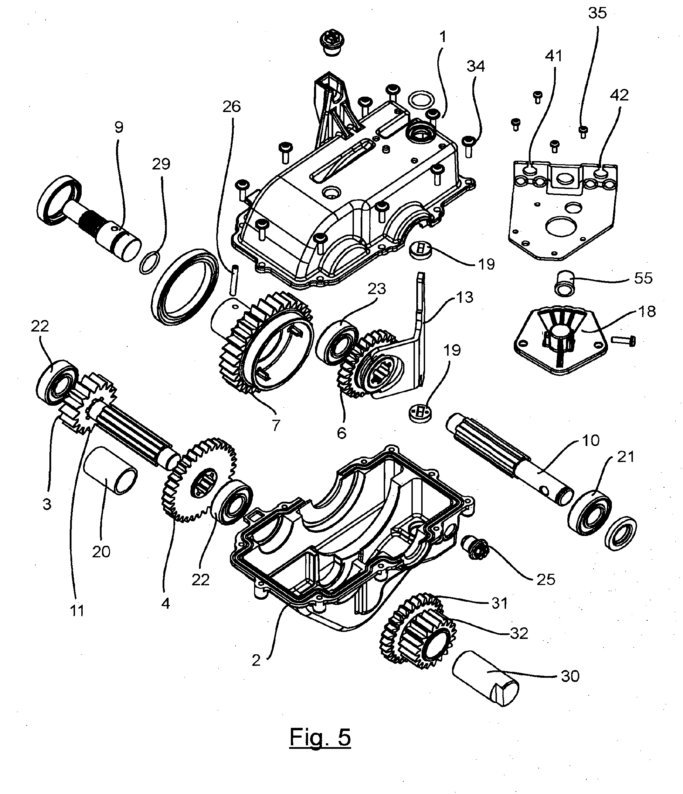

En outre, comme indiqué ci-après en référence notamment à la figure 5, la boîte est configurée de telle sorte que la position de marche arrière est située entre les deux positions de marche avant.

La figure 5 présente un agencement en vue éclatée d'un mode de réalisation de l'invention. Selon ce mode de réalisation, la boîte fournit deux vitesses en marche avant et une vitesse en marche arrière, la marche arrière étant agencée entre les deux marches avant.

L'arbre 10 d'entrée est porté à une extrémité par un roulement 21 et à l'autre extrémité par l'intermédiaire d'un pignon 7 de sortie de boîte et d'un roulement 23 portant le pignon 7 de sortie de boîte. Le pignon 7 de sortie de boîte présente un arbre creux dans lequel est emmanché l'arbre 9 de sortie. Un joint 29 torique est ménagé sur l'arbre 9 de sortie. Le pignon 7 de sortie de boîte comprend un alésage diamétral coïncidant avec un alésage diamétral ménagé dans l'arbre 9 de sortie. Cet alésage est destiné à recevoir une goupille 26 formant un fusible mécanique. Cette goupille 26 présente une résistance à la rupture prédéterminée, de telle sorte qu'elle puisse se rompre si le couple transmis par l'arbre d'entrée à l'arbre de sortie dépasse une valeur prédéterminée.

La boîte comprend également un arbre 11 intermédiaire porté par des logements hémi-circulaires ménagés dans les parois des demi-coques et pourvus de roulements 22. L'arbre 11 intermédiaire comprend deux pignons 3, 4 séparés l'un de l'autre par une entretoise 20, et désignés respectivement dans tout le texte par les termes de pignon 3 distal et pignon 4 proximal.

Le pignon 4 proximal est adapté pour coopérer avec le pignon 6 baladeur de l'arbre 10 d'entrée et le pignon 3 distal est adapté pour coopérer avec le pignon 7 de sortie de boîte dans lequel est emmanché l'arbre 9 de sortie.

La boîte de transmission comprend également un arbre 80 de marche arrière. Cette arbre 80 comprend un pignon 81 menant adapté pour coopérer avec le pignon 6 baladeur, lorsque ce dernier est dans la position de marche arrière, et un pignon 82 mené adapté pour entraîner le pignon 4 proximal de l'arbre 11 intermédiaire. Selon le mode de réalisation des figures, les pignons 81 menant et 82 mené sont accolés l'un à l'autre. Selon un autre mode de réalisation, ils peuvent être séparés par une entretoise.

Les arbres 10 d'entrée, 9 de sortie, 11 intermédiaire et 80 de marche arrière sont parallèles entre eux.

Selon un mode préférentiel de réalisation de l'invention, le changement de rapport de transmission se fait par l'intermédiaire d'un levier 18 de sélection solidaire d'une fourchette 13 qui agit directement sur le pignon 6 baladeur pour le déplacer le long de l'arbre 10 d'entrée. Cette fourchette 13 est maintenue en position par l'intermédiaire de deux guides fourchette 19 montés à chacune des extrémités de la fourchette. L'extrémité supérieure de la fourchette s'étend à travers la demi-coque 1 supérieure du carter pour que la fourchette puisse être commandée par le levier 18 de sélection.

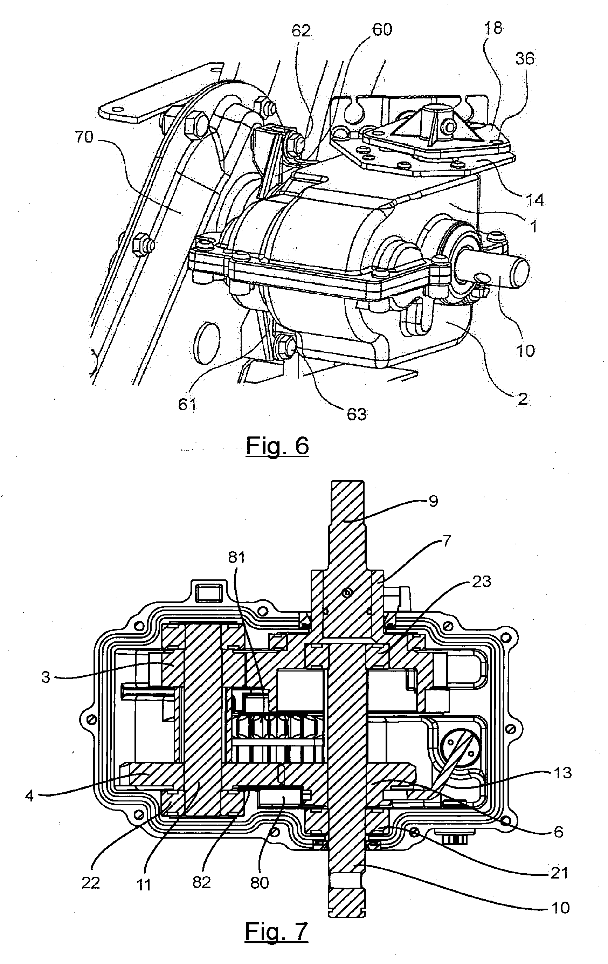

Sur la figure 7, la fourchette 13 est dans une position dans laquelle elle place le pignon 6 baladeur dans la position de première marche avant, dans laquelle il est en prise avec le pignon 4 proximal de l'arbre 11 intermédiaire. Le mouvement de rotation de l'arbre 10 d'entrée est donc transmis à l'arbre 11 intermédiaire par le biais du pignon 6 baladeur et du pignon 4 proximal, solidaire de l'arbre 11 intermédiaire. Le mouvement de l'arbre 11 intermédiaire est alors transmis à l'arbre 9 de sortie par l'intermédiaire du pignon 3 distal, solidaire de l'arbre 11 intermédiaire, qui entraîne le pignon 7 de sortie, solidaire de l'arbre 9 de sortie. Cette position correspond à la première marche avant de l'équipement.

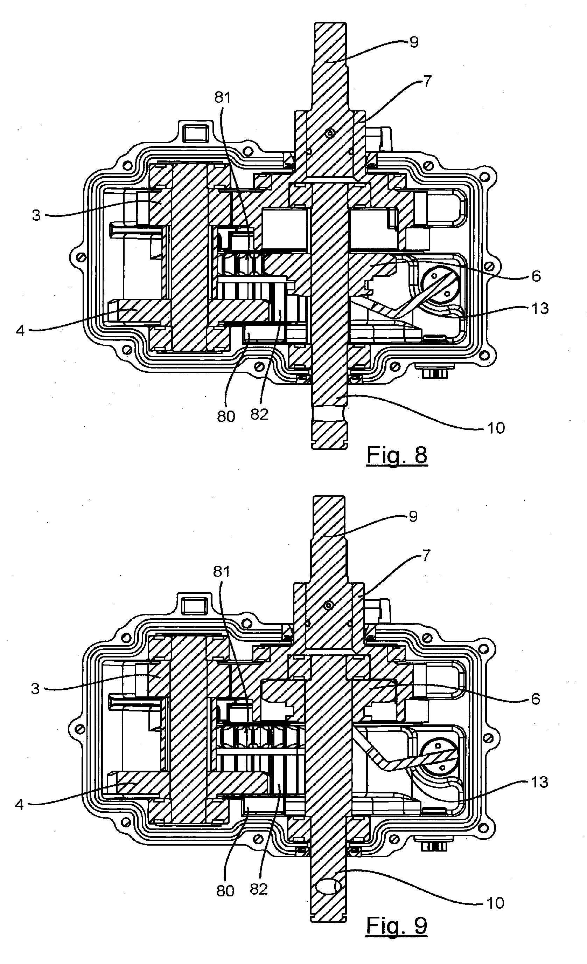

Sur la figure 8, la fourchette 13 est dans une position dans laquelle elle place le pignon 6 baladeur dans la position de marche arrière dans laquelle il est en prise avec le pignon 81 menant de l'arbre 80 intermédiaire. Le mouvement de rotation de l'arbre 10 d'entrée est transmis à l'arbre 11 intermédiaire par le biais du pignon 6 baladeur, du pignon 81 menant de l'arbre de marche arrière, qui entraîne à son tour le pignon 82 mené de l'arbre intermédiaire 80. Ce pignon 82 mené de l'arbre 80 de marche arrière entraîne à son tour le pignon 4 proximal, solidaire de l'arbre 11 intermédiaire. Selon une autre variante, les pignons 81 menant et 82 mené sont formés d'un seul pignon comprenant deux dentures adjacentes, une première adaptée pour coopérer avec le pignon 6 baladeur et une seconde adaptée pour coopérer avec le pignon 4 proximal. Le mouvement en rotation de l'arbre 11 intermédiaire est ensuite transmis à l'arbre 9 de sortie par le biais du pignon 3 distal, solidaire de l'arbre 11 intermédiaire, en prise avec le pignon 7 de sortie. Cette position correspond à la marche arrière de l'équipement.

Sur la figure 9, la fourchette 13 est dans une position dans laquelle le pignon 6 baladeur est dans la position de deuxième marche avant, dans laquelle il est en prise directe avec le pignon 7 de sortie. Pour ce faire, le pignon 7 de sortie comprend une denture interne adaptée pour coopérer avec la denture externe du pignon 6 baladeur. Cette position correspond à la seconde marche, avant de l'équipement.

Comme on le constate à la vue des figures 7, 8 et 9, la position de marche arrière est située entre les deux positions de marche avant, du fait de la configuration particulière de la boîte de vitesses décrite. Cette configuration tient notamment du fait que le pignon 81 menant de l'arbre 80 intermédiaire est situé entre le pignon menant de l'arbre intermédiaire, c'est à dire le pignon 4 proximal, et le pignon menant de l'arbre 9 de sortie, c'est à dire le pignon 7 de sortie de boîte. En outre, le pignon 4 proximal de l'arbre intermédiaire présente deux fonctions. D'une part, il participe à la formation du rapport de transmission de la première marche avant (engrènement direct entre le pignon 6 baladeur et le pignon 4 proximal) et d'autre part, il participe à la formation du rapport de transmission de marche arrière (engrènement successif entre le pignon 6 baladeur, le pignon 81 menant de l'arbre de marche arrière entraînant le pignon 82 mené de l'arbre de marche arrière, engrenant le pignon 4 proximal).

Une boîte de vitesses selon l'invention est modulaire étant donné qu'il est possible de poser une bride sur l'arbre 10 d'entrée de manière à empêcher le déplacement du pignon 6 baladeur jusqu'à la deuxième position de marche avant, de manière à fournir uniquement une boîte de vitesses comprenant une vitesse de marche avant et une vitesse de marche arrière. Cette bride est par exemple une entretoise qui bloque le déplacement du pignon 6 baladeur le long de l'arbre 10 d'entrée. Cette bride peut également être prévue au niveau du sélecteur 36 pour empêcher la rotation du sélecteur vers la position de la vitesse que l'on souhaite supprimer.

Il est également possible de supprimer l'arbre 80 de marche arrière de manière à fournir une boîte de vitesses sans marche arrière.

Le levier 18 de sélection comprend un premier élément 36 d'ancrage d'un premier câble 38 de commande, et un second élément 37 d'ancrage d'un second câble 39 de commande.

Selon le mode préférentiel de réalisation, les éléments 36, 37 d'ancrage sont agencés de part et d'autre de l'axe de rotation du sélecteur de vitesses.

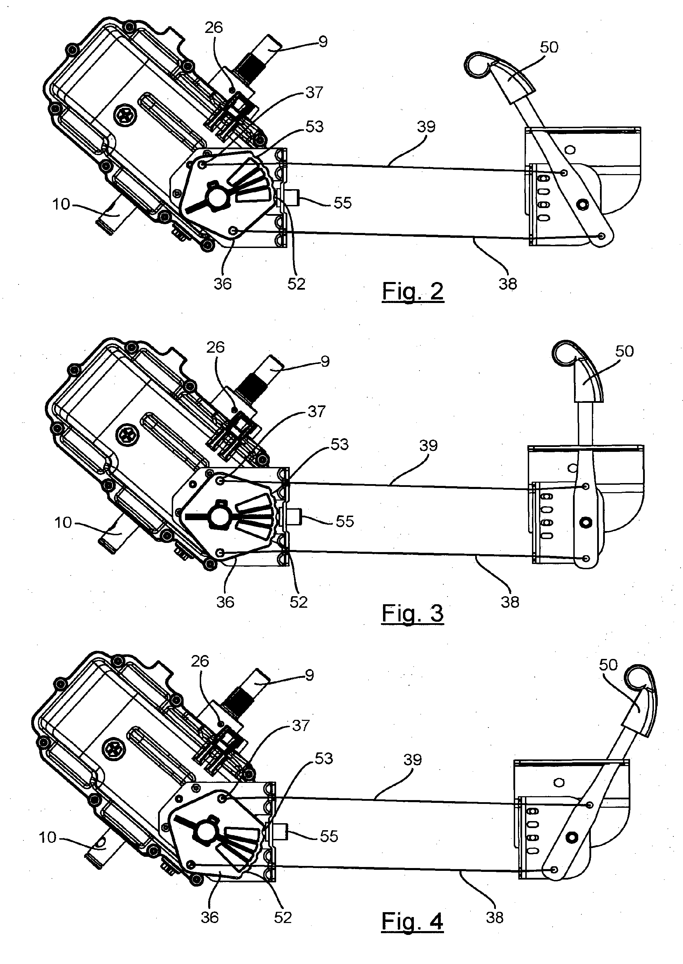

Selon le mode de réalisation des figures, les éléments 36, 37 d'ancrage sont des orifices traversant le levier 18 de sélection et s'étendant selon une direction sensiblement parallèle à l'axe de rotation du sélecteur. Il est donc possible de fixer les câbles 38, 39 de commande à ces éléments d'ancrage 36, 37 de sorte qu'une sollicitation en traction du premier câble 38 de commande entraîne la rotation du sélecteur de vitesse dans un premier sens de rotation. Ce sens de rotation est selon la vue des figures 2, 3 et 4, le sens anti-horaire. La sollicitation en traction du second câble 39 de commande entraîne la rotation du sélecteur de vitesse dans le sens de rotation opposée, c'est-à-dire le sens horaire en ce qui concerne la vue des figures 2, 3 et 4.

La fixation des câbles dans les éléments 36, 37 d'ancrage peut être réalisée de la manière suivante. Chaque câble est passé à travers l'orifice correspondant. L'extrémité du câble est munie d'une butée qui empêche le passage de l'extrémité du câble en sens inverse à travers l'orifice. Cette butée est par exemple un petit cylindre métallique présentant un alésage diamétral à travers lequel le câble peut être passé et/ou solidarisé, par exemple par brasure. Lors de la sollicitation en traction du câble de commande, la butée vient en appui contre le pourtour de l'orifice formant l'élément d'ancrage, ce qui entraîne la rotation du sélecteur de vitesse autour de l'axe de rotation

Selon d'autres modes de réalisation, les éléments 36, 37 d'ancrage peuvent être des serre-câbles ou des pinces ou des rivets ou des serre-vis ou des soudures ou tout autre moyen équivalent.

Les câbles destinés à êtres ancrés dans les moyens d'ancrage du levier 18 de sélection peuvent être de tous types. Selon un mode de réalisation avantageux, les câbles 38 , 39 sont des câbles tressés en acier inoxydable.

Selon le mode de réalisation des figures, la boîte comprend également une platine 14 fixée sur la demi-coque 1 supérieure de la boîte. Cette platine présente un flasque 40 comprenant deux ouvertures 41, 42 formant des moyens de guidage des câbles 38, 39 de commande. Selon un mode de réalisation avantageux, cette platine 14 comprend en outre une ouverture adaptée pour permettre à l'extrémité supérieure de la fourchette 13 de déboucher et d'être solidarisée au levier 18 de sélection.

Une boîte de vitesses selon l'invention est destinée à être montée sur un équipement de motoculture tel une motobineuse.

Un tel équipement comprend de préférence, outre une boîte de vitesses selon l'invention, une poignée 50 de commande et les deux câbles 38, 39 de commande ancrés aux éléments 36, 37 d'ancrage du levier 18 de sélection. Chaque câble de commande est relié à chacune de ses extrémités d'une part à un élément d'ancrage et d'autre part à la poignée de commande. Cette poignée 50 de commande est montée pivotante sur l'équipement.

Sur la figure 2, la poignée 50 de commande est dans une position correspondant à la première position de marche avant.

Sur la figure 3, la poignée 50 de commande est dans une position correspondant à la position de marche arrière.

Sur la figure 4, la poignée 50 de commande est dans une position correspondant à une seconde position de marche avant.

Pour passer de la première position de marche avant, telle que représentée sur la figure 2, à la position de marche arrière, telle que représentée sur la figure 4, un opérateur doit faire pivoter la poignée 50 de commande dans le sens horaire. Cette action sur la poignée sollicite en traction le câble 39 de sorte qu'un effort sur le levier 18 de sélection est exercé au niveau de l'élément d'ancrage 37. Le levier 18 de sélection entraîne le déplacement du pignon 6 baladeur le long de l'arbre 10 d'entrée jusqu'à la position de marche arrière du pignon 6 baladeur.

Si l'opérateur poursuit son action, il déplace le pignon baladeur vers la deuxième position de marche avant.

Pour passer de la deuxième position de marche avant, telle que représentée sur la figure 4 à la position de marche arrière, telle que représentée sur la figure 3, un opérateur doit faire pivoter la poignée 50 de commande dans le sens anti-horaire. Cette action sur la poignée sollicite en traction le câble 38 de sorte qu'un effort sur le levier 18 de sélection est exercé au niveau de l'élément 36 d'ancrage. Le levier de sélection entraîne le déplacement du pignon 6 baladeur le long de l'arbre d'entrée jusqu'à la position de marche arrière par l'intermédiaire de la fourchette 13 de sélection.

Chaque position du levier de sélection correspond à un rapport de transmission prédéterminé. Chaque vitesse correspond à une position angulaire prédéterminée du levier 18 de sélection. Le passage d'une vitesse à une autre est obtenu par le déplacement de la poignée 50 de commande, qui entraîne le déplacement du levier 18 de sélection, qui lui-même entraîne le déplacement de la fourchette 13, de manière à positionner le pignon 6 baladeur dans une position définissant le rapport de transmission entre l'arbre 10 d'entrée et l'arbre 9 de sortie.

Pour faciliter le positionnement angulaire du levier de sélection, la boîte de vitesses comprend selon un mode préférentiel de réalisation, un dispositif à bille adapté pour coopérer avec le levier 18 pour définir un ensemble de positions angulaires prédéterminées du levier 18, chaque position étant associée à un rapport de transmission prédéterminé.

Pour ce faire, le levier 18 de sélection comprend, tel que représenté sur les figures 2 et 3, une pluralité de zones 52, 53 concaves ménagées sur le bord périphérique du levier 18 de sélection en regard du flasque 40 de la platine 14. Ces zones 52, 53 concaves présentent des formes et dimensions conformées et conjuguées à une bille montée dans un poussoir 55 à bille. Ces zones 52, 53 concaves forment des logements de réception de cette bille. Le poussoir 55 à bille est porté par le flasque 40 de la platine 14.

Chaque position angulaire prédéterminée correspond au logement de la bille dans une zone concave. Dès lors, lorsqu'un utilisateur actionne la poignée 50 de commande, le levier est mis en rotation de sorte que les zones concaves coopèrent successivement avec la bille du poussoir 55 à bille.

Le poussoir 55 à bille peut selon un mode de réalisation comprendre un ressort ménagé dans un cylindre. Ce ressort porte en outre la bille.

Les deux demi-coques 1, 2 sont solidarisées l'une à l'autre par l'intermédiaire de vis 34. En outre, une fois le carter fermé, ce dernier peut être alimenté en huile pour assurer un graissage de l'ensemble des organes logés dans le carter, notamment les arbres et pignons. Un bouchon 25 étanche permet de maintenir l'huile à l'intérieur du carter et de vidanger ce dernier lorsque nécessaire.

Enfin, la platine 14 est montée sur la demi-coque 1 supérieure par l'intermédiaire de vis 35.

Une boîte de vitesses selon l'invention est de préférence montée sur un équipement par l'intermédiaire de deux points de fixation et d'un point d'appui.

Un exemple de montage est représenté sur la figure 6. La boîte de vitesses selon le mode de réalisation de la figure 6 comprend deux ailes 60, 61 verticales. Chaque aile présente un alésage de réception d'une vis 62, 63 pour assurer la fixation de la boîte de vitesses sur l'équipement 70. Seule une portion de l'équipement 70 est représentée sur la figure 6 à des fins de clarté.

Bien évidemment, d'autres moyens de fixation peuvent être prévus dans d'autres modes de réalisation.

L'invention ne se limite pas aux seuls modes de réalisation décrits. En particulier, une boîte de vitesses selon l'invention peut présenter une architecture interne différente. Par exemple, les arbres d'entrée et de sortie peuvent ne pas être coaxiaux et la boîte peut présenter un nombre différent de vitesses. De même, le système de billage permettant de positionner précisément la fourchette de commande par l'intermédiaire du levier de commande peut selon un autre mode de réalisation être interne à la boîte. Par exemple, l'extrémité inférieure de la fourchette peut comprendre une aile, s'étendant perpendiculairement à l'axe de rotation du levier de sélection, et portant un bouton poussoir à bille coopérant avec une forme portée par le carter. Selon un autre mode de réalisation, l'aile présente une forme adaptée pour coopérer avec un système à bille porté par le carter. D'autres moyens équivalents sont utilisables pour permettre le logement du mécanisme à bille à l'intérieur de la boîte.

### Utilisation des rapports de vitesses fournis par la boîte de vitesse

De façon avantageuse, dans un équipement de motoculture selon l'invention, les pignons de la boîte de vitesses représentée sur les figures 1 à 9, ainsi que les transmissions entre le moteur et la boîte de vitesse et entre la boîte de vitesse et l'arbre de travail portant les outils, peuvent être dimensionnés de telle sorte que, dans une première des positions de marche avant, l'arbre de travail portant les outils effectue un tour pour 53,8 tours du moteur, et, dans la deuxième des positions de marche avant, l'arbre de travail portant les outils effectue un tour pour 21,8 tours du moteur.

Plus précisément, dans le motoculteur équipé de la boîte de vitesses représentée sur les figures 1 à 9, la transmission du moteur vers la boîte de vitesse est faite par une courroie tendue entre une poulie moteur, portée par l'arbre de sortie du moteur, de 55 mm de diamètre, et une poulie de réception portée par l'arbre d'entrée 10 de la boîte de vitesses, de 260 mm de diamètre.

Dans la boîte de vitesse, le pignon 6 baladeur compte 26 dents, le pignon 4 compte 33 dents, le pignon 3 compte 16 dents, le pignon 7 de sortie compte 31 dents, le pignon 81 menant compte 27 dents, et le pignon 82 mené compte 19 dents. Enfin, en sortie de la boîte de vitesses, l'arbre 9 de sortie porte un pignon de 8 dents entraînant une chaîne qui entraîne elle-même en rotation un pignon de 37 dents lié à l'arbre de travail portant les outils.

Bien entendu, ces valeurs ne constitue qu'un exemple de réalisation de l'invention. Il est à noter en effet que des valeurs proches de ces valeurs de rapports de vitesses, par exemple un rapport de vitesse de 50 (+/- 5) / 1 entre le moteur et l'arbre de travail, et l'autre position offre un rapport de vitesse de 20 (+/- 5) / 1 entre le moteur et l'arbre de travail, permettent d'obtenir les mêmes résultats avantageux.

Ainsi, en utilisant un moteur classiquement mis en oeuvre dans les équipements de motoculture de relativement petite taille, offrant une plage de vitesses comprise entre 1 450 et 3 600 tours/minute (dont la vitesse de rotation peut être ajustée entre 1 450 et 3 600 tours/minute), la première position de marche avant permet d'obtenir une plage de vitesses de l'arbre de travail portant les outils comprise entre 27 et 67 tours/minute (la vitesse de rotation de l'arbre de travail portant les outils est comprise entre 27 et 67 tours/minute) et la seconde vitesse de marche avant permet d'obtenir une plage de vitesses de l'arbre de travail portant les outils comprise entre 67 et 165 tours/minute (la vitesse de rotation de l'arbre de travail portant les outils est comprise entre 67 et 165 tours/minute).

Ainsi, l'équipement de motoculture équipé de cette boîte de vitesses peut travailler avec une vitesse de rotation des outils comprise entre 27 et 165 tours par minute, sans que cette plage de vitesses de rotation d'outils soit interrompue. Cette plage de vitesses possibles d'utilisation est très étendue, la vitesse la plus faible utilisable étant plus de six fois plus élevée que la vitesse maximale utilisable.

Par ailleurs, dans la première position de marche avant, l'arbre de travail porteur des outils peut développer un couple compris entre 450 et 520 Nm, alors que dans la deuxième position de marche avant, cet arbre peut développer un couple compris entre 185 et 210 Nm.

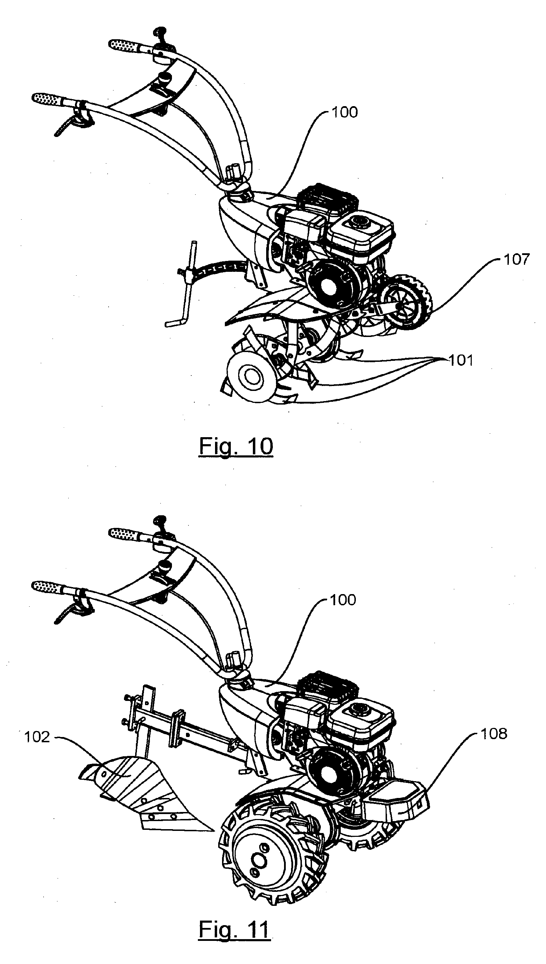

Cette continuité et la grande amplitude de la plage des vitesses de travail pouvant être utilisées, avec un couple relativement important pour toutes ces vitesses, permet d'utiliser les outils portés par le motoculteur dans des fonctions différentes de l'art antérieur. Ainsi, un tel motoculteur 100 équipé, comme le représente la figure 10, des fraises 101 utilisées habituellement à une vitesse de 130 à 160 tours par minute pour bêcher un terrain peut également être utilisés pour le défonçage d'un terrain à une vitesse de 60 tours par minute ou pour l'émiettage de terre à une vitesses de 165 tours par minute.

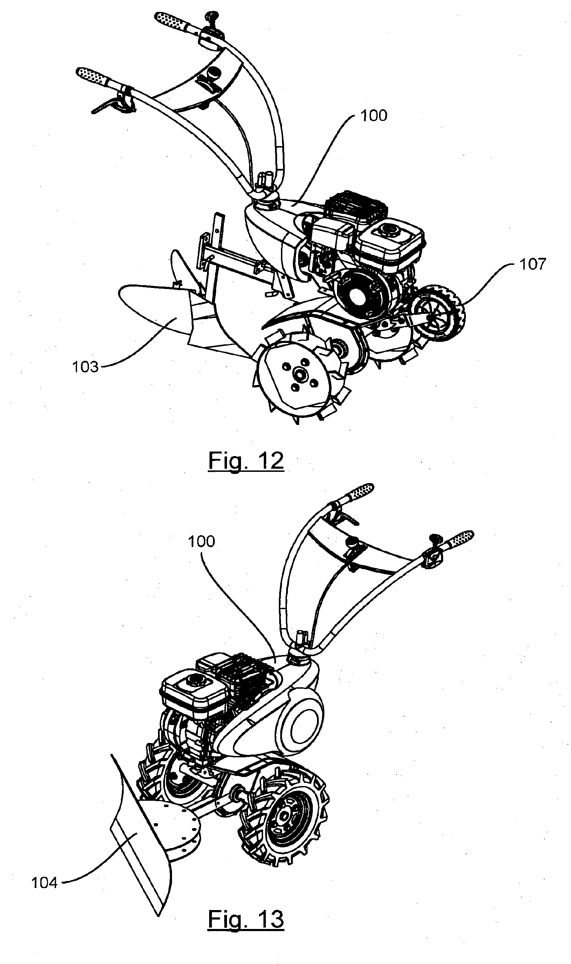

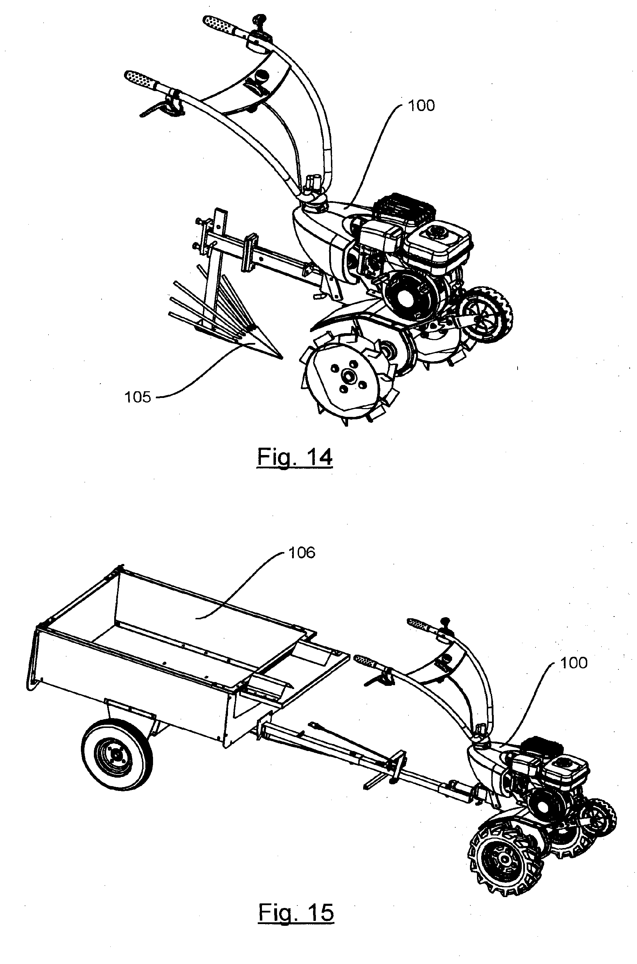

De plus, cette plage importante et continue de vitesses de travail permet également d'utiliser le motoculteur 100 avec d'autres outils, comme une charrue 102, comme le représente la figure 11, un buteur 103, comme le représente la figure 12, une lame 104 (de type bulldozer), comme le représente la figure 13, un outil d'arrachage de pommes de terre 105, comme le représente la figure 14, un émousseur, voire un attelage permettant l'entraînement d'une remorque 106, comme le représente la figure 15. La plage continue de vitesses de rotation offerte par la boîte de vitesses permet une utilisation dans des conditions optimales de chacun de ces outils.

La boîte de vitesses selon l'invention permet donc d'offrir des possibilités d'utilisation accrues du motoculteur, pour un coût inférieur à celui des motoculteurs de l'art antérieur, avec une facilité d'utilisation, une efficacité et une compacité (poids de 55 kg) particulièrement intéressante.

Selon un mode de réalisation avantageux de l'invention, une portion du carter couvrant les éléments de transmission entre le moteur et la boîte de vitesses, et notamment la poulie réceptrice, la courroie, le levier actionneur d'embrayage et son galet, peut être constitués par une plaque translucide permettant le contrôle visuel de l'état de ces éléments.

Comme le montrent les figures, le motoculteur peut être équipé d'une roue de transport multifonctions 107, escamotable pour permettre l'accrochage d'une masse d'équilibrage avant 108 à la place de la roue lors de l'utilisation d'un accessoire de type charrue.

Il est à noter qu'un motoculteur tel que décrit ci-dessus peut recevoir un système de commande d'embrayage pneumatique tel que décrit dans la demande de brevet EP 0 870 949 et/ou un système de transmission tel que décrit dans la demande de brevet EP 0 543 731.

L'utilisation d'un motoculteur sur une plage de vitesses de travail large et continue, telle que décrite dans la présente demande, présente des avantages et peut être mis en oeuvre avec une boîte de vitesse d'un type différent de celle représentée aux figures 1 à 9. Elle pourrait par exemple être mise en oeuvre avec des boîtes de vitesses présentant plus de deux rapports de marche avant, même si la boîte de vitesses représentée aux figures 1 à 9 présente de grands avantages, notamment du fait de sa simplicité. Par ailleurs, les rapports de vitesses offerts peuvent bien entendu être différents de ceux présentés, notamment pour s'adapter à des moteurs présentant des régimes différents.

## Revendications

1. Boîte de vitesses pour équipement mobile, destinée à interconnecter des moyens moteurs à des organes d'entraînement de l'équipement, la boîte comprenant :
- un arbre (10) d'entrée adapté pour être entraîné en rotation par lesdits moyens moteurs,
- un arbre (9) de sortie adapté pour entraîner lesdits organes d'entraînement de l'équipement,
- un pignon, dit pignon (6) baladeur, monté mobile sur l'arbre (10) d'entrée, et adapté pour occuper au moins une première position de marche avant, au moins une deuxième position de marche avant, et au moins une position de marche arrière,
**caractérisée en ce que** la boîte est configurée de sorte que la position de marche arrière du pignon (6) baladeur est située entre deux positions de marche avant.

2. Boîte selon la revendication 1, **caractérisée en ce qu'**elle comprend un arbre (11) intermédiaire comprenant au moins deux pignons : un pignon, dit pignon (4) proximal, adapté pour coopérer avec le pignon (6) baladeur lorsqu'il occupe ladite première position de marche avant, et un pignon, dit pignon (3) distal, adapté pour coopérer avec l'arbre (9) de sortie.

3. Boîte de vitesses selon la revendication 2, **caractérisée en ce qu'**elle comprend un arbre (80) de marche arrière comprenant au moins un pignon (81) menant adapté pour coopérer avec le pignon (6) baladeur lorsqu'il est dans la position de marche arrière, et un pignon (82) mené adapté pour coopérer avec le pignon (4) proximal de l'arbre (11) intermédiaire.

4. Boîte de vitesses selon l'une des revendications 1 à 3, **caractérisée en ce que** ledit arbre (9) de sortie comprend au moins un pignon, dit pignon (7) de sortie, adapté pour être entraîné en rotation par ledit pignon (6) baladeur lorsqu'il se trouve dans ladite deuxième position de marche avant.

5. Boîte de vitesses selon l'une des revendications 1 à 4, **caractérisée en ce que** l'arbre (10) d'entrée et l'arbre (9) de sortie sont coaxiaux.

6. Boîte de vitesses selon l'une des revendications 1 à 5, **caractérisée en ce que** l'arbre (10) d'entrée est apte à recevoir une bride limitant en partie le déplacement du pignon (6) baladeur le long de l'arbre (10) d'entrée.

7. Boite de vitesses selon l'une des revendications 1 à 6, **caractérisée en ce qu'**elle comprend un sélecteur (18, 13) de vitesse adapté pour coopérer avec ledit pignon (6) baladeur, et permettre par son déplacement une modification de rapport de transmission entre l'arbre (10) d'entrée et l'arbre (9) de sortie.

8. Boîte de vitesses selon la revendication 7, **caractérisée en ce que** le sélecteur (18, 13) de vitesses est mobile en rotation et comprend au moins deux éléments (36, 37) d'ancrage d'un câble agencés de part et d'autre de l'axe de rotation du sélecteur, chaque élément (36, 37) d'ancrage étant adapté pour recevoir un câble (38, 39) de commande de sorte qu'une sollicitation en traction du premier (38) câble ancré dans le premier élément (36) d'ancrage entraîne la rotation dudit sélecteur (18, 13) de vitesses dans un premier sens de rotation et qu'une sollicitation en traction du câble (39) ancré dans le second élément (37) d'ancrage entraîne la rotation dudit sélecteur (18, 13) dans le sens de rotation opposé.

9. Boîte de vitesses selon la revendication 8, **caractérisé en ce qu'**elle comprend une platine (14) fixée à un carter de boîte, ladite platine (14) présentant un flasque (40) comprenant des moyens (42, 43) de guidage des câbles de commande.

10. Boîte de vitesses selon l'une des revendications 8 ou 9, **caractérisée en ce que** le sélecteur (18, 13) de vitesses comprend :
- un levier (18) de sélection comportant lesdits éléments d'ancrage,
- une fourchette (13) solidaire du levier (18) de sélection et s'étendant à l'intérieur de la boîte pour coopérer avec ledit pignon (6) baladeur et permettre par son déplacement une modification de rapport de transmission entre l'arbre (10) d'entrée et l'arbre (9) de sortie.

11. Boîte de vitesses selon l'une des revendications 7 à 10, **caractérisée en ce qu'**il comprend un dispositif (55) à bille adapté pour coopérer avec ledit sélecteur (18, 13) de vitesses pour définir un ensemble de positions angulaires prédéterminées dudit sélecteur de vitesses, chaque position étant associée à un rapport de transmission prédéterminé.

12. Boîte de vitesses selon l'une des revendications 1 à 11, **caractérisée en ce que** ledit arbre (9) de sortie comprend un fusible mécanique présentant une résistance à la rupture prédéterminée et adaptée pour se rompre si le couple transmis par l'arbre (10) d'entrée à l'arbre (9) de sortie dépasse une valeur prédéterminée.

13. Boîte de vitesses selon les revendications 4 et 12 prises ensemble, **caractérisée en ce que** ledit arbre (9) de sortie est emmanché dans ledit pignon (7) de sortie de boîte et **en ce que** ledit fusible mécanique est une goupille (26) qui s'étend diamétralement à travers ledit pignon (7) de sortie de boîte et ledit (9) arbre de sortie.

14. Equipement de motoculture **caractérisé en ce qu'**il comprend une boîte de vitesses selon l'une des revendications 1 à 13.

## Patentansprüche

1. Getriebe für eine bewegliche Vorrichtung, welches dazu bestimmt ist, Antriebsmittel mit Antriebsorganen der Vorrichtung zu verbinden, wobei das Getriebe umfasst:
- eine Eingangswelle (10), die dafür eingerichtet ist, durch die Antriebsmittel drehend angetrieben zu werden,
- eine Ausgangswelle (9), die dazu eingerichtet ist, die Antriebsorgane der Vorrichtung anzutreiben,
- ein Ritzel, "Schieberad" (6) genannt, das beweglich auf der Eingangswelle (10) angebracht ist und dafür eingerichtet ist, mindestens eine erste Vorwärtsgangposition, mindestens eine zweite Vorwärtsgangposition und mindestens eine Rückwärtsgangposition einzunehmen,
**dadurch gekennzeichnet, dass** das Getriebe derart gestaltet ist, dass sich die Rückwärtsgangposition des Schieberades (6) zwischen den beiden Vorwärtsgangpositionen befindet.

2. Getriebe nach Anspruch 1, **dadurch gekennzeichnet, dass** es eine Zwischenwelle (11) umfasst, die mindestens zwei Ritzel umfasst: ein Ritzel, "proximales Ritzel" (4) genannt, das dafür eingerichtet ist, mit dem Schieberad (6) zusammenzuwirken, wenn dieses die erste Vorwärtsgangposition einnimmt, und ein Ritzel, "distales Ritzel" (3) genannt, das dafür eingerichtet ist, mit der Ausgangswelle (9) zusammenzuwirken.

3. Getriebe nach Anspruch 2, **dadurch gekennzeichnet, dass** es eine Rückwärtsgangwelle (80) umfasst, die mindestens ein führendes Ritzel (81), das dafür eingerichtet ist, mit dem Schieberad (6) zusammenzuwirken, wenn dieses sich in der Rückwärtsgangposition befindet, und ein geführtes Ritzel (82), das dafür eingerichtet ist, mit dem proximalen Ritzel (4) der Zwischenwelle (11) zusammenzuwirken, umfasst.

4. Getriebe nach einem der Ansprüche 1 bis 3, **dadurch gekennzeichnet, dass** die Ausgangswelle (9) mindestens ein Ritzel umfasst, "Ausgangsritzel" (7) genannt, das dafür eingerichtet ist, von dem Schieberad (6) drehend angetrieben zu werden, wenn dieses sich in der zweiten Vorwärtsgangposition befindet.

5. Getriebe nach einem der Ansprüche 1 bis 4, **dadurch gekennzeichnet, dass** die Eingangswelle (10) und die Ausgangswelle (9) koaxial sind.

6. Getriebe nach einem der Ansprüche 1 bis 5, **dadurch gekennzeichnet, dass** die Eingangswelle (10) geeignet ist, einen Flansch aufzunehmen, der die Verschiebung des Schieberades (6) entlang der Eingangswelle (10) teilweise begrenzt.

7. Getriebe nach einem der Ansprüche 1 bis 6, **dadurch gekennzeichnet, dass** es einen Drehzahlselektor (18, 13) umfasst, der dafür eingerichtet ist, mit dem Schieberad (6) zusammenzuwirken und durch dessen Verschiebung eine Änderung des Übersetzungsverhältnisses zwischen der Eingangswelle (10) und der Ausgangswelle (9) zu ermöglichen.

8. Getriebe nach Anspruch 7, **dadurch gekennzeichnet, dass** der Drehzahlselektor (18, 13) drehbeweglich ist und mindestens zwei Elemente (36, 37) zur Verankerung eines Kabels umfasst, die beiderseits der Drehachse des Selektors angeordnet sind, wobei jedes Verankerungselement (36, 37) dafür eingerichtet ist, ein Steuerkabel (38, 39) aufzunehmen, derart, dass eine Zugbeanspruchung des in dem ersten Verankerungselement (36) verankerten ersten Kabels (38) die Drehung des Drehzahlselektors (18, 13) in einer ersten Drehrichtung zur Folge hat und eine Zugbeanspruchung des in dem zweiten Verankerungselement (37) verankerten Kabels (39) die Drehung dieses Selektors (18, 13) in der entgegengesetzten Drehrichtung zur Folge hat.

9. Getriebe nach Anspruch 8, **dadurch gekennzeichnet, dass** es eine an einem Getriebegehäuse befestigte Platte (14) umfasst, wobei die Platte (14) einen Flansch (40) aufweist, der Mittel (42, 43) zur Führung der Steuerkabel umfasst.

10. Getriebe nach einem der Ansprüche 8 oder 9, **dadurch gekennzeichnet, dass** der Drehzahlselektor (18, 13) umfasst:
- einen Wahlhebel (18), der die Verankerungselemente aufweist,
- eine Gabel (13), die mit dem Wahlhebel (18) fest verbunden ist und sich im Inneren des Gehäuses erstreckt, um mit dem Schieberad (6) zusammenzuwirken und durch dessen Verschiebung eine Änderung des Übersetzungsverhältnisses zwischen der Eingangswelle (10) und der Ausgangswelle (9) zu ermöglichen.

11. Getriebe nach einem der Ansprüche 7 bis 10, **dadurch gekennzeichnet, dass** es eine Kugelvorrichtung (55) umfasst, die dafür eingerichtet ist, mit dem Drehzahlselektor (18, 13) zusammenzuwirken, um eine Menge von vorbestimmten Winkelpositionen des Drehzahlselektors zu definieren, wobei jede Position einem vorbestimmten Übersetzungsverhältnis zugeordnet ist.

12. Getriebe nach einem der Ansprüche 1 bis 11, **dadurch gekennzeichnet, dass** die Ausgangswelle (9) eine mechanische Sicherung umfasst, die eine vorbestimmte Bruchfestigkeit aufweist und dafür eingerichtet ist zu brechen, falls das Drehmoment, das durch die Eingangswelle (10) auf die Ausgangswelle (9) übertragen wird, einen vorbestimmten Wert übersteigt.

13. Getriebe nach den Ansprüchen 4 und 12 in ihrer Gesamtheit, **dadurch gekennzeichnet, dass** die Ausgangswelle (9) in das Ausgangsritzel (7) des Getriebes eingepasst ist, und dadurch, dass die mechanische Sicherung ein Sicherungsstift (26) ist, der sich diametral durch das Ausgangsritzel (7) des Getriebes und die Ausgangswelle (9) erstreckt.

14. Motorisierte landwirtschaftliche Vorrichtung, **dadurch gekennzeichnet, dass** sie ein Getriebe nach einem der Ansprüche 1 bis 13 umfasst.

## Claims

1. Gearbox for a mobile implement, designed to interconnect motor means with drive elements of the implement, the gearbox comprising:
- an input shaft (10) adapted to being driven in rotation by said motor means,
- an output shaft (9) adapted to driving said drive elements of the implement,
- a pinion, called a sliding pinion (6), mounted so as to be mobile on the input shaft (10), and adapted to occupying at least one first forward gear position, at least one second forward gear position and at least one reverse gear position,
**characterized in that** the gearbox is configured so that the reverse gear position of the sliding pinion (6) is situated between two forward gear positions.

2. Gearbox according to claim 1, **characterized in that** it comprises an intermediate shaft (11) comprising at least two pinions: a pinion called a proximal pinion (4), adapted to cooperating with the sliding pinion (6) when it occupies said first forward gear position, and a pinion called a distal pinion (3), adapted to cooperating with the output shaft (9).

3. Gearbox according to claim 2, **characterized in that** it comprises a reverse gear shaft (80) comprising at least one driving pinion (81) adapted to cooperating with the sliding pinion (6) when it is in the reverse gear position, and a driven pinion (82) adapted to cooperating with the proximal pinion (4) of the intermediate shaft (11).

4. Gearbox according to any one of the claims 1 to 3, **characterized in that** said output shaft (9) comprises at least one pinion, called an output pinion (7), adapted to being driven in rotation by said sliding pinion (6) when it is in said second forward gear position.

5. Gearbox according to any one of the claims 1 to 4, **characterized in that** the input shaft (10) and the output shaft (9) are coaxial.

6. Gearbox according to any one of the claims 1 to 5, **characterized in that** the input shaft (10) is capable of receiving a clamp partially limiting the shifting of the sliding pinion (6) along the input shaft (10).

7. Gearbox according to any one of the claims 1 to 6, **characterized in that** it comprises a speed selector (18, 13) adapted to cooperating with said sliding pinion (16) and enabling, through its shifting, a modification of the transmission ratio between the input shaft (10) and the output shaft (9).

8. Gearbox according to claim 7, **characterized in that** the speed selector (18, 13) is mobile in rotation and comprises at least two elements (36, 37) for anchoring a cable laid out on either side of the axis of rotation of the selector, each anchoring element (36, 37) being adapted to receiving a control cable (38, 39) so that an application of tensile force on the first cable (38) anchored in the first anchoring element (36) drives the rotation of said speed selector (18, 13) in a first direction of rotation and an application of tensile force on the cable (39) anchored in the second anchoring element (37) drives the rotation of said selector (18, 13) in the opposite direction of rotation.

9. Gearbox according to claim 8 **characterized in that** it comprises a plate (14) attached to a gearbox casing, said plate (14) having a side plate (40) comprising means (42, 43) for guiding the control cables.

10. Gearbox according to any one of the claims 8 or 9, **characterized in that** the speed selector (18, 13) comprises:
- a selection lever (18) comprising said anchoring elements,
- a bracket (13) fixedly attached to the selection lever (18) and extending into the box to cooperate with said sliding pinion (6) and to enable, by its shifting, a modification of the transmission ratio between the input shaft and the output shaft.

11. Gearbox according to any one of the claims 7 to 10, **characterized in that** it comprises a ball device (55) adapted to cooperating with said speed selector (18, 13) to define a set of predetermined angular positions of said speed selector, each position being associated with a predetermined transmission ratio.

12. Gearbox according to any one of the claims 1 to 11, **characterized in that** said output shaft (9) comprises a mechanical fuse having a predetermined breaking strength and being adapted to breaking if the torque transmitted by the input shaft (10) to the output shaft (9) exceeds a predetermined value.

13. Gearbox according to claims 4 and 12 taken together, **characterized in that** said output shaft (9) is fitted into said output gearbox pinion (7) and **in that** said mechanical fuse is a pin (26) that extends diametrically through said gearbox output pinion (7) and said output shaft (9).

14. Power farming implement **characterized in that** it comprises a gearbox according to any one of the claims 1 to 13.
